# EUROPEAN PATENT SPECIFICATION

(11) **EP 2 306 122 B1**
(45) Date of publication and mention of the grant of the patent: **26.07.2017**
(21) Application number: 09770030.6
(22) Date of filing: 12.06.2009
(51) Int. Cl.: F25B 1/00, F25B 6/02, C09K 5/04, F25B 9/00, F25B 49/00, F25B 13/00

(54) **REFRIGERATING CYCLE APPARATUS, AND AIR CONDITIONING APPARATUS**
KÄLTEPROZESSVORRICHTUNG UND KLIMAANLAGE
APPAREIL À CYCLE DE RÉFRIGÉRATION, ET CLIMATISEUR

(30) Priority: 24.06.2008 JP 2008164454
(43) Date of publication of application: 06.04.2011
(73) Proprietor: Mitsubishi Electric Corporation, Chiyoda-ku Tokyo 100-8310 (JP)
(72) Inventor: YAMASHITA, Koji, Tokyo 100-8310 (JP); YABU, Atsuhiro, Tokyo 100-8310 (JP); KODA, Toshihide, Tokyo 100-8310 (JP)
(74) Representative: Pfenning, Meinig & Partner mbB
(86) International application number: PCT/JP2009/060726
(87) International publication number: WO 2009/157320

(56) References cited:
- JP-A- 10 300 248
- JP-A- 11 063 726
- JP-A- 63 123 945
- JP-A- H11 108 468
- JP-A- 2001 072 965
- JP-A- 2001 072 966
- JP-A- 2008 055 929
- JP-K1- H04 110 388
- US-A1- 2004 221 593

## Description

### Technical Field

The present invention relates to a refrigerating cycle device constituting a refrigerating cycle such as air conditioners including a multi-air conditioner for building, a room-air conditioner, a package air conditioner and the like, a refrigerator and the like.

### Background Art

In a refrigerating cycle device using a refrigerating cycle (heat-pump cycle) such as an air conditioner, a freezer, a water heater and the like, basically, a compressor, a condenser (heat exchanger), an expansion valve, and an evaporator (heat exchanger) are connected by piping so as to constitute a refrigerant circuit through which a refrigerant is circulated, for example. By using heating (radiation) and cooling (heat absorption) of a heat-exchange target by the refrigerant in evaporation and condensation, an air-conditioning operation, a cooling operation, a heating operation and the like are performed while a pressure inside a pipe is changed.

Here, as refrigerant in a refrigerant circuit in a prior-art refrigerating cycle device, single refrigerant such as HCFC-22 (CHC1F₂) and HFC-134a (CF₃CH₂F) and mixed refrigerant such as R-410A, which is a mixture of HFC-32 (CH₂F₂) and HFC-125 (CH₃CHF₂), and R-407C, which is a mixture of HFC-32 (CH₂F₂) and HFC-125 (CF₃CHF₂), and HFC-134a (CF₃CH₂F), which are chemically stable substances, are used (See Patent Literature 1, for example).

Patent Literature 2 discloses an air conditioner which uses refrigerants of a HFC system. A control section is configured to control a degree of opening of an expansion valve dependent on a temperature at the head part of a compressor. Moreover, a pressure detected by a pressure sensor is compared with a set pressure and in case the set pressure is exceeded the control section controls the opening degree of the expansion valve.

Patent Literature 3 discloses a heat transfer medium comprising an organic compound which has one double bond in the molecular structure.

Patent Literature 4 describes a method for controlling an air conditioner whether the compressor is in a stable condition and if the driving mode is in the unstable area variable factors, like compressor operational frequency, electrical expansion valves and fans are controlled.

### Citation List

### Patent Literature

PTL 1: Japanese Unexamined Patent Application Publication No. 2006-152839 (Claim 2)
PTL2: JP 11-108468 A1
PTL3: JP H4-110388
PTL4: US 2004/0221593 A1

### Summary of Invention

### Technical Problem

Here, as a refrigerant circulating through a refrigerant circuit, from a viewpoint of preventing global warming, a refrigerant having as small global warming coefficient (GWP: a degree of incurring global warming with respect to a substance, which is a greenhouse effect gas, represented by a coefficient determined on the basis of knowledge internationally approved as numeral values indicating a ratio to the degree regarding carbon dioxide) as possible is preferably used. Such refrigerant includes those containing a substance having a chemically unstable double bond (multi bond) in an atomic bond such as CF₃CF = CH₂, CF₃CH = CH₂, CF₃CF = CF₂ and the like (hereinafter referred to as refrigerant having a double bond).

Since in the prior-art refrigerating cycle device, a chemically stable substance is used as a refrigerant, there is no need to worry that the substance in the refrigerant might be decomposed during use (hereinafter referred to as decomposition of a refrigerant) or the like and stop functioning as a refrigerant. However, since the refrigerant having the double bond as above is a chemically unstable refrigerant, it is likely that the refrigerant might be decomposed and deteriorated under a usual method of use. For example, in the case of the mixed refrigerant, too, the mixed refrigerant as a whole might stop functioning since it is decomposed and deteriorated by the other refrigerants or decomposes and deteriorates the other refrigerants, and as a result, there is a possibility that the refrigerating cycle device cannot be used normally.

The present invention was made in order to solve the above problems and has an object to obtain a refrigerating cycle device or the like that can prevent decomposition of the refrigerant and maintain a normal operation for a long time even if a refrigerant containing a chemically unstable substance such as a refrigerant having a double bond is used as a refrigerant to be circulated through a refrigerant circuit.

### Solution to Problem

The cited problem is solved by the features of the independent claim.

In a refrigerating cycle device a refrigerant circuit is configured by connecting a compressor for compressing a refrigerant containing a substance having a chemically unstable double bond, a condenser for condensing the refrigerant by heat exchange, expanding means for decompressing the condensed refrigerant, and an evaporator for evaporating the decompressed refrigerant by heat exchange by piping and the device is provided with control means for controlling an operation of the refrigerant circuit so that a pressure value of the refrigerant in the refrigerant circuit becomes less than a critical pressure of the substance having the double bond.

According to the refrigerating cycle device of the present invention, in configuring a refrigerant circuit through which a refrigerant containing a substance having chemically unstable double bond is circulated, since an operation of the refrigerant circuit is controlled so that a pressure value of the refrigerant in the refrigerant circuit becomes less than a critical pressure of the substance having double bond, in the refrigerant containing the substance having chemically unstable double bond, decomposition of the substance itself having double bond due to exceeding of the critical pressure by the substance having double bond or attack on the substance having double bond due to exceeding of the critical pressure of the other substances, which results in non-functioning as the refrigerant, can be effectively suppressed. Therefore, performances of the refrigerating cycle device can be maintained for a long time, and moreover, reliability can be ensured. As a result, a refrigerating cycle device can be obtained in which a refrigerant with a smaller global warming coefficient and containing a substance suitable for the environment and having chemically unstable double bond, for example, can be effectively used.

### Brief Description of Drawings

[Fig. 1] Fig. 1 is a diagram illustrating a configuration of a refrigerating cycle device according to refrigerating cycle device which is helpful to explain the present invention.
[Fig. 2] Fig. 2 is a P-h diagram of the refrigerating cycle device according to the refrigerating cycle device of figure 1.
[Fig. 3] Fig. 3 is a diagram illustrating a chemical change of refrigerant having double bond.
[Fig. 4] Fig. 4 is a diagram illustrating a configuration including a system according to control of a refrigerating cycle device helpful to explain the present invention.
[Fig. 5] Fig. 5 is a diagram illustrating a flowchart of the refrigerating cycle device according to a refrigerating cycle device helpful to explain the present invention.
[Fig. 6] Fig. 6 is a diagram illustrating a configuration of an air conditioner according to a refrigerating cycle device helpful to explain the present invention.
[Fig. 7] Fig. 7 is a diagram illustrating a configuration of an air conditioner according to an Embodiment of the present invention.

### Description of Embodiments

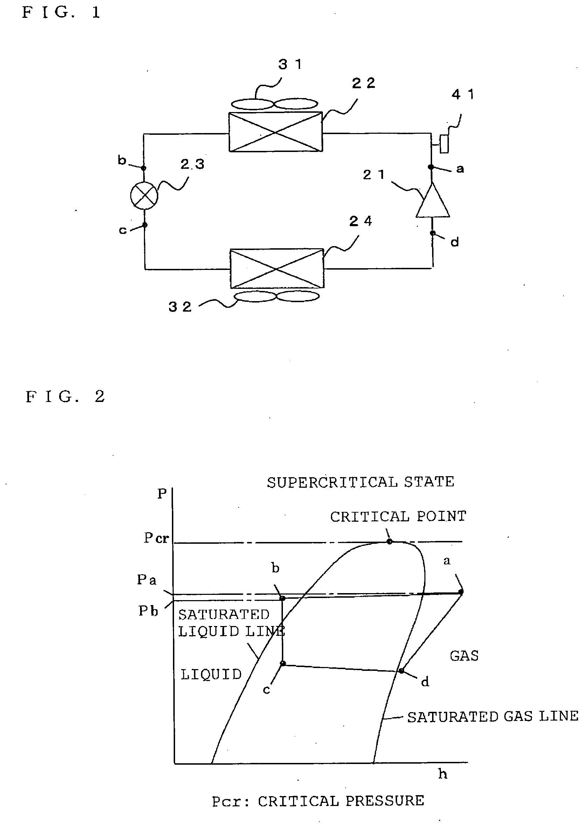

Fig. 1 is a diagram illustrating a configuration of a refrigerating cycle device according to a refrigerating cycle device helpful to understand the present invention. In Fig. 1, the refrigerating cycle device has a compressor 21, a condenser 22, a condenser fan 31, expanding means 23, an evaporator 24, an evaporator fan 32, and pressure detecting means 41. A refrigerant circuit is configured by connecting the compressor 21, the condenser 22, the expanding means 23, and the evaporator 24 by piping. Here, in this refrigerating cycle device, a mixed refrigerant in which at least one type of refrigerant containing a substance having double bond in atomic bond is mixed is sealed as a refrigerant to become a medium for carrying heat in the refrigerant circuit. The refrigerant will be described later.

The compressor 21 sucks the refrigerant to be circulated in the refrigerant circuit, compresses it and raises its pressure. For the compressor 21, any of various types such as reciprocating, rotary, scroll, screw and the like may be used. Also, the compressor may be provided with an inverter circuit, for example, that can change a capacity (an amount of the refrigerant to be fed per unit time) by arbitrarily changing a compressor frequency even in a compressor with a fixed compressor frequency. The condenser 22 performs heat exchange between a gas state refrigerant (hereinafter referred to as a gas refrigerant) discharged by the compressor 21 and a heat-exchange target (supposing to be air in this refrigerating cycle device), emits a heat quantity of the refrigerant to heat the air. The condenser fan 31 feeds air to the condenser 22 so as to perform heat exchange with the refrigerant efficiently. The expanding means 23 is constituted by an electronic expansion valve, a temperature-type expansion vale, a capillary tube and the like and adjusts a flow rate of the passing refrigerant to lower the pressure of the refrigerant (to decompress).

The evaporator 24 performs heat exchange between a gas-liquid two-phase refrigerant (a refrigerant in a state in which a gas refrigerant and a liquid-state refrigerant (hereinafter referred to as a liquid refrigerant) are mixed) whose pressure is lowered by the expanding means 23 and the heat-exchange target (supposing to be air, too) so that the refrigerant absorbs the heat quantity and is gasified. The air is cooled. The evaporator fan 32 is also provided for efficient heat exchange between the air and the refrigerant in the evaporator 24. Here, the heat exchange with air is performed using the condenser fan 31 and the evaporator fan 32, but heat exchange with water can be performed using a water cooler using a pump and water instead of the condenser fan 23, a device such as a chiller using pump and water or brine instead of the evaporator fan 26 and the like.

The pressure detecting means 41, which is a pressure sensor, is disposed on the side of a refrigerant outlet (discharge) of the compressor 21, which is a portion with the highest pressure in the refrigerant circuit in this Embodiment and transmits a signal on the basis of a pressure relating to the detection to control means or the like, which will be described later. Here, a level of the pressure in the refrigerant circuit is not determined by a relationship with a pressure to be a reference but is indicated as a relative pressure determined by compression of the compressor 21, refrigerant flow-rate control of the expanding means 23 and the like. The same applies to a degree of the temperature.

In Fig. 1, a configuration with a single unit of the condenser 22 and a single unit of the evaporator 24 is described as an example, but the number of connection of the condenser 22 and the evaporator 24 in the refrigerant circuit is not limited to one, but a plurality of units can be connected in parallel, for example. In the case of the compressor 21, a configuration with a single unit is also described as an example, but a plurality of compressors 21 can be connected in series or in parallel, for example.

Fig. 2 is a P-h diagram relating to the refrigerant circuit configured by the refrigerating cycle device in Fig. 1. Pressures and enthalpy at points a, b, c, and d shown in Fig. 2 represent the pressures and enthalpy at the corresponding points in the refrigerating cycle device in Fig. 1.

Subsequently, an operation of the refrigerating cycle device according to this refrigerating cycle device will be described on the basis of a flow of a refrigerant. The high-temperature refrigerant having been compressed by the compressor 21 and to become a pressure Pa on the outlet (discharge) side is fed into the condenser 22 through the piping. The refrigerant having passed through the condenser 22 is condensed and liquefied by heat exchange with air fed in by the condenser fan 31. At this time, the refrigerant emits heat, by which the heat-exchange target is heated. Due to pressure loss generated during this process, the pressure of the refrigerant is slightly lowered from Pa to Pb.

The liquefied refrigerant is fed into the expanding means 23. The liquid refrigerant is decompressed while passing through the expanding means 23 so as to become the gas-liquid two-phase refrigerant and is fed into the evaporator 24. The gas-liquid two-phase refrigerant having passed through the evaporator 24 is heat-exchanged with the air fed in by the evaporator fan 32 and evaporated and gasified. The gasified refrigerant is sucked again by the compressor 21.

At this time, in the refrigerant circuit, a flow passage of the refrigerant from the compressor 21 to the expanding means 23 is a high-pressure flow passage, which is a flow passage with a relatively high pressure in the refrigerant circuit. In general, the pressure Pa of the refrigerant on the outlet side of the compressor 21 is the highest, while the pressure Pb of the refrigerant on the inlet side of the expanding means 23 is slightly lower than Pa due to the pressure loss in the condenser 22 and the connection piping. In the embodiments of the present invention, control for keeping the refrigerant pressure in the refrigerant circuit low is performed by constituent means of the refrigerating cycle device, but the refrigerant pressure in the refrigerating cycle device here is basically supposed to the pressure Pa of the refrigerant on the outlet side of the compressor 21.

In the P-h diagram shown in Fig. 2, a point where a saturated liquid line meets a saturated gas line is referred to as a critical point, and in a state in which the refrigerant pressure is higher than a pressure at the critical point (hereinafter referred to as a critical pressure. It is a pressure Pcr in Fig. 2), the refrigerant is in a supercritical state, which is neither liquid nor gas. If the refrigerant is brought into the supercritical state, it presents a nature different from that in the gas state or liquid state. In the supercritical state, even a substance, which is stable in a usual use, has a nature to decompose, a nature that dissolves various substances well and the like are shown. Such high solubility and reactivity require consideration for materials of a container or a seal in the compressor 21 or the like.

Here, a mixed refrigerant constituted as a mixture of a plurality of types of refrigerants is considered. Mixed refrigerants usually used include R-410A, which is a mixture of HFC-32 and HFC-125, R-407C, which is a mixture of HFC-32, HFC-125, and HFC-134a and the like.

Expressing substances constituting the respective refrigerants by chemical formulas, HFC-32 is CH₂F₂, HFC-125 is CH₃CHF₂, and HFC-134a is CF₃CH₂F. These refrigerants are chemically stable and remain as global warming gases for a long time. Thus, values of their global warming coefficients indicating a rate to contribute to the global warming are relatively large.

On the other hand, in an atomic bond constituting a substance, a refrigerant made of a substance having a double bond might be mixed with other refrigerants. The refrigerant made of a substance having the double bond includes CF₃CF = CH₂ (hydrofluoroolefin (HFO) refrigerant represented by 2, 3, 3, 3-tetrafluoropropene and HFO-1234yf) and a refrigerant containing substances such as CF₃CH = CH₂, CF₃CF = CF₂ and the like (the symbol "=" represents a double bond), for example. From a viewpoint of the global environment, a mixed refrigerant in which a plurality of types of refrigerants with smaller global warming coefficients and made of substances having the double bond are mixed may be preferably used, but a refrigerant made of a substance bonded by a single bond such as HFC-32, HFC-125, HFC-134a and the like or other refrigerants can be also mixed.

Here, the substance having double bond has a chemically unstable nature, and the refrigerant made of such substance has a nature of being easily decomposed in the air, for example, due to an influence of light, ozone and the like. Thus, since they do not remain as a global warming gas for a long time, they have a little influence on the warming and their values of global warming coefficient are relatively small. Also, not only in the air, if the single refrigerant made of a substance having double bond or a mixed refrigerant containing the refrigerant made of a substance having double bond (refrigerant having double bond) is sealed to be used as a refrigerant to be circulated through the refrigerant circuit (working fluid), the double bond is decomposed in the refrigerant circuit, and there is a risk that the.refrigerant stops functioning as refrigerant.

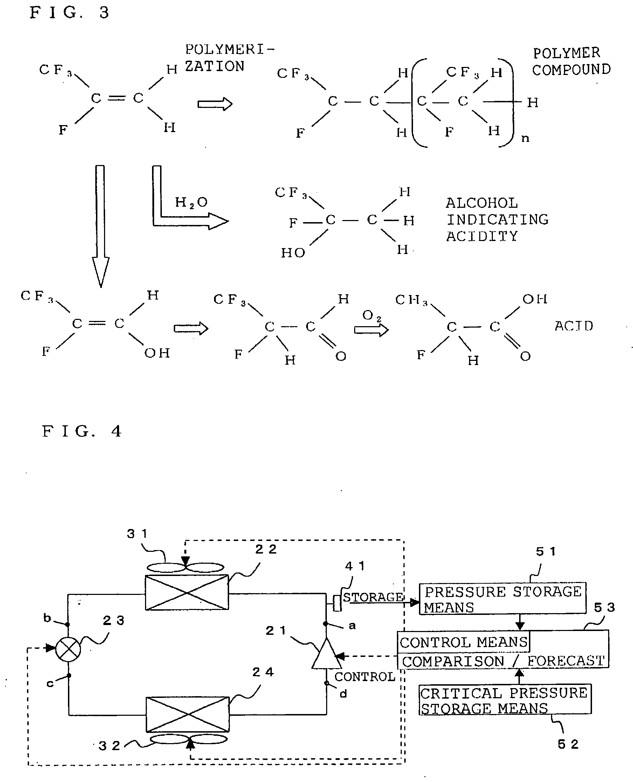

Fig. 3 is a diagram illustrating an example of decomposition of CF₃CF = CH₂ or the like. Here, the decomposition of double bond will be described using the decomposition of CF₃CF = CH₂ as an example. For example, CF₃CF = CH₂ causes a chemical change as shown in Fig. 3. Molecules of CF₃CF = CH₂ might be polymerized to become a polymer compound with a large molecular weight in the form of CF₃CFCH₂ (CF₃CFCH₂)nH. This polymer compound becomes a sludge and circulates with the refrigerant in the refrigerant circuit, which causes valve clogging or the like in the expanding means or the like whose flow passage is narrow, for example. If water is present in the refrigerant circuit, the compound might become alcohol presenting acidity in the form of CF₃CFCOHCH₃ or sludge. Moisture in the refrigerant circuit is usually adsorbed and removed by a drier (not shown) or the like. Moreover, the polymer might become an acid in the form of CH₃CFHC = OOH and change its property and in the end, stop performing a function as a refrigerant.

Therefore, if the refrigerant having double bond is used as a refrigerant to be circulated in the refrigerant circuit (working fluid), it should be used in a state in which a cause to promote decomposition of the refrigerant such as air, light and the like is removed as much as possible.

Here, the mixed refrigerant will be described. The mixed refrigerant has different natures relating to heat, different refrigerating cycles (P-h diagram), and different critical points depending on constituting refrigerants. In the refrigerating cycle device using the mixed refrigerant as the refrigerant circulating in the refrigerant circuit (working fluid), each refrigerant repeats condensation and evaporation and circulates in the refrigerant circuit. Here, among refrigerants constituting the mixed refrigerant, a critical pressure of the refrigerant with the lowest critical point is referred to as the lowest critical pressure.

The critical pressure of the refrigerant is 5.78 MPa for HFC-32, 3.616 MPa for HFC-125, 4.048MPa for HFC-134, and approximately 3.3 MPa for CF₃CF = CH₂, for example. Therefore, if the refrigerants of HFC-32, HFC-125, and CF₃CF = CH₂ are mixed, the critical pressure of CF₃CF = CH₂ is the smallest, and CF₃CF = CH₂ itself is the first to be brought into the supercritical state.

Here, in the refrigerant circuit through which the mixed refrigerant is circulated, if the pressure of the refrigerant (particularly, the pressure on the high-pressure side) is lower than the lowest critical pressure all the time, the refrigerants are not decomposed or the like but circulated in the refrigerant circuit for a long time and is capable of repeated condensation, evaporation and the like. However, if the refrigerant pressure becomes higher than the lowest critical pressure, the refrigerant with a low critical pressure is brought into the supercritical state, and it is circulated in the supercritical state with other refrigerants in the refrigerant circuit.

If the refrigerant is brought into the supercritical state, as mentioned above, even a substance which is usually stable will have a nature to decompose another substance or the like. Thus, in the mixed refrigerant, if the refrigerant in the supercritical state exceeding the critical pressure is present, it would attack and try to decompose the other refrigerants.

In the mixed refrigerant constituted only by chemically stable refrigerants such as R-410A and R-407C, for example, even if the refrigerant pressure on the high pressure side becomes higher than the lowest critical pressure and a part of the refrigerants is brought into the supercritical state, the mixed refrigerant as a whole is not decomposed but can be used stably.

When the refrigerant made up of a substance having double bond such as CF₃CF = CH₂ is contained in the mixed refrigerant, if refrigerants other than the refrigerant made up of the substance having double bond is brought into the supercritical state, for example, the refrigerant in the supercritical state attacks the refrigerant made up of the chemically unstable substance having double bond, and the refrigerant is decomposed and cannot maintain stable properties any longer. Also, if all the refrigerants are decomposed or the like, the mixed refrigerant will not function as a refrigerant at all.

Thus, in the mixed refrigerant containing the refrigerant made up of a substance having double bond, it is indispensable that the refrigerant pressure at all the positions in the refrigerant circuit is controlled so that the pressure is at the lowest critical pressure or less all the time and the mixed refrigerant is circulated so that none of the refrigerants is brought into the supercritical state.

Also, the refrigerant in the supercritical state also attacks itself. Thus, the above also applies to a situation in which the critical pressure of the other refrigerants are higher than the refrigerant made up of a substance having the double bond or a situation in which only the refrigerant made up of a substance having the double bond is used as a refrigerant, and if the device is to be operated, control should be made in circulating the refrigerant so that the refrigerant is not turned into the supercritical state.

As mentioned above, a flow passage to become the high pressure side in the refrigerant circuit is a flow passage leading from the compressor 21 to the expanding means 23. In this flow passage, too, since the refrigerant is compressed and boosted in the compressor 21, in the general refrigerating cycle device, the pressure on the outlet (discharge) side of the compressor 21 is the highest in the refrigerant circuit.

Then, in this refrigerating cycle device the pressure detecting means 41 is disposed on the outlet side of the compressor 21 so as to obtain the refrigerating cycle device controlled so that a pressure on the basis of a signal from the pressure detecting means 41 does not exceed the lowest critical pressure.

Fig. 4 is a diagram illustrating a configuration of the refrigerating cycle device including a system relating to control of this refrigerating cycle device. In Fig. 4, control means 53 executes processing for controlling operations of each means of the refrigerating cycle device. Particularly in this refrigerating cycle device the control means functions as high-pressure control means for controlling each means by determining a value of a refrigerant pressure of a portion to become the highest pressure in the refrigerant circuit (hereinafter referred to as a high-pressure pressure value) on the basis of a signal from the pressure detecting means 41 and executing processing such as calculation. Pressure storage means 51 stores data of a plurality of high-pressure pressure values per predetermined interval for a past predetermined period of time. Also, the critical pressure storage means 52 is means for storing a pressure value set on the basis of the lowest critical pressure mentioned in the mixed refrigerant. Here, the means stores two values, that is, a first pressure value and a second pressure value.

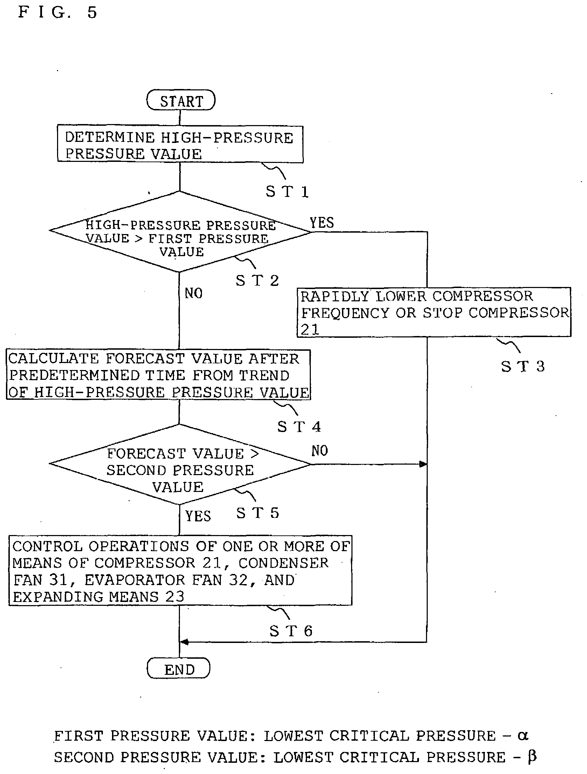

Fig. 5 is a diagram illustrating a flowchart of pressure control executed by the control means 53. On the basis of Figs. 4 and 5, an operation of the refrigerating cycle device mainly on the processing executed by the control means 53 will be described. On the basis of a signal transmitted.from the pressure detecting means 41 installed on the outlet side of the compressor 21, the control means 53 determines a high-pressure pressure value (ST1) and has it stored in the pressure storage means 51.

Also, the control means 53 compares the high-pressure pressure value with the first pressure value stored in the critical pressure storage means 52 (ST2). Here, in this Embodiment, with regard to the first pressure value, a value obtained by subtracting a predetermined value a to become a margin from a value of the lowest critical pressure is set as the first pressure value so that it becomes less than the critical pressure having double bond, for example, considering a detection error of pressure contained in the high-pressure pressure value, a refrigerant pressure inside the compressor 21 and the like. The first pressure value is a value lower than the lowest critical pressure. A value of the predetermined value α can be determined arbitrarily but here, it is supposed to be 0.2 (MPa).

As the result of comparison, if it.is determined that the high-pressure pressure value is larger than the first pressure value, the control means 53 controls the compressor 21 so as to rapidly lower the refrigerant pressure on the high pressure side of the refrigerant circuit (ST3) so that the refrigerant is not decomposed. The control of the compressor 21 includes rapid lowering of a compressor frequency if the compressor 21 is a compressor having an inverter circuit, for example. Alternatively, if the compressor 21 is a compressor with a fixed compressor frequency, its operation is temporarily stopped.

On the other hand, as the result of comparison, if it is determined that the high-pressure pressure value is not more than the first pressure value, then, on the basis of data of the plurality of high-pressure pressure values for a past predetermined period of time stored in the pressure storage means 51, a forecast value of a pressure after a predetermined time is calculated (ST4). Regarding calculating the forecast value, a variation with time (trend) is derived from a plurality of high-pressure pressure values using a method as a three-point forecast method or the like, and a pressure value after a predetermined time is calculated as a forecast value. Here, the control means 53 may calculate the forecast value not only by the three-point forecast method but also by other methods.

The control means 53 compares the calculated forecast value and the second pressure value stored in the critical pressure storage means 52 (ST5). Here, with the second pressure value, too, a value obtained by subtracting a predetermined value β to become a margin from a value of the lowest critical pressure is set as the second pressure value, considering a detection error of a pressure included in the high-pressure pressure value or the like. The second pressure value is also a value lower than the lowest critical pressure. A value of the predetermined value β can be determined arbitrarily, but it is supposed to be 0.5 (MPa), here. Here, the first pressure value is made different from the second pressure value, but they may be the same. Alternatively, only one of comparison between the high-pressure pressure value and the first pressure value and comparison between the forecast value and the second pressure value can be made.

As the result of comparison, if it is determined that the high-pressure pressure value is larger than the second pressure value, the control means 53 controls operations of one or more means of the compressor 21, the condenser fan 31, the evaporator fan 32, and the expanding means 23 of the refrigerating cycle device. By means of this control, the refrigerant pressure on the high-pressure side of the refrigerant circuit is lowered so that the pressure does not exceed the lowest critical pressure and the refrigerant is not decomposed. Here, in the control to lower the refrigerant pressure executed by the control means 53, if the compressor 21 is a compressor having an inverter circuit, for example, the compressor frequency is lowered by a predetermined amount (10 Hz, for example). Also, with regard to the condenser fan 31, a heat quantity of the refrigerant in the condenser 22 is emitted by increasing the rotation number of the fan. Also, with regard to the expanding means 23, an opening degree is increased and the pressure on the high pressure side is lowered. With regard to the evaporator fan 32, the rotation number of the fan is decreased, and absorption of the heat quantity by the refrigerant in the evaporator 24 is suppressed. The control means 53 repeats the above processing and controls each means of the refrigerating cycle device so that even one type of the refrigerants constituting the mixed refrigerant circulating in the refrigerant circuit is not decomposed or the like.

Here, in this refrigerating cycle device, a configuration in which the pressure detecting means 41 is installed at an outlet portion of the compressor 21 was described as an example, but the installation position is not limited to the outlet portion. Pressure loss from the outlet of the compressor 21 to the condenser 22 or the expanding means 23 can be calculated from a piping diameter, a piping length, a refrigerant flow-rate and the like, for example. By installing the pressure detecting means 41 at the inlet side of the condenser 22 or the inlet side of the expanding means 23, for example, a pressure at the outlet of the compressor 21 can be estimated and calculated easily from a refrigerant pressure value relating to detection at the position. Thus, only if the pressure detecting means 41 is installed at a position anywhere from the compressor outlet to the expanding means inlet, control can be made so that the pressure on the compressor outlet side does not exceed the lowest critical pressure.

Also, regarding the pressure detecting means 41, a pressure sensor of a semiconductor type or a strain gauge type for performing signal transmission according to a detected pressure is generally used. However, the pressure detecting means 41 is not limited to these types of pressure sensor but a pressure sensor outputting an ON signal at a predetermined pressure may be used, for example. In this case, the control means 53 does not have to determine the high-pressure pressure value.

Also, if a pressure switch is used, a value slightly lower than the lowest critical pressure is set as a predetermined pressure in the pressure switch, and wiring is laid so that a compression operation of the compressor 21 is stopped by an ON signal outputted by the pressure switch at the predetermined pressure. In this case, the pressure storage means 51, the critical pressure storage means 52, and the control means 53 as high-pressure control means in this Embodiment are not necessary any more, and an inexpensive control system can be configured. However, the compressor 21 repeats start and stop in the vicinity of the lowest critical pressure. Thus, there is a possibility that cooling capacity or heating capacity cannot be fully exerted, and the pressure sensor is preferably used.

Also, temperature detecting means such as a temperature sensor or the like for detecting a condensation temperature may be installed close to the center of the condenser 22 instead of the pressure detecting means 41, for example, so that a refrigerant pressure on the high pressure side is calculated on the basis of a condensation temperature. In order to detect the condensation temperature, the refrigerant needs to be in a gas-liquid two-phase state at a position where the temperature detecting means is installed, basically, and if the means are installed at plural locations, detection accuracy of the condensation temperature can be improved, by which detection accuracy of the pressure can be also improved.

As mentioned above, according to the refrigerating cycle device of this refrigerating cycle device, if a refrigerant circuit through which a refrigerant containing a substance having double bond such as CF₃CF = CH₂, CF₃CH = CH₂, CF₃CF = CF₂ and the like is circulated is to be configured, if the control means 53 determines that a pressure on the outlet side of the compressor 21 to become the highest pressure portion in the refrigerant circuit is larger than the first pressure value set on the basis of the lowest critical pressure, which is the lowest in the substances constituting the refrigerant, control is made so that the compressor frequency of the compressor 21 is rapidly lowered or the compressor 21 is stopped so as to prevent the lowest critical pressure from being exceeded. Thus, the refrigerant containing a chemically unstable substance having double bond can be prevented from being attacked by decomposition of the substance itself having double bond or decomposition of substances of the other refrigerants in the mixed refrigerant and decomposed so as to stop functioning as a refrigerant. Therefore, performances of the refrigerating cycle device can be maintained for a long time, and reliability can be also ensured. Here, the pressure can be lowered by other means, but in order to lower the pressure on the outlet side of the compressor 21, it is most effective to rapidly lower the compressor frequency of the compressor 21 or to stop the compressor 21. Also, since deterioration of the refrigerant is prevented and heat-quantity feeding, which is a role of the refrigerant, can be maintained without giving a load to the compressor 21, energy can be saved. Also, the HFO refrigerant such as tetrafluoropropylene or the like used as refrigerant at this time has a global warming coefficient equivalent to that of carbon dioxide, which is a natural refrigerant, for example, and this is preferable in terms of the environment.

Also, since the forecast value of the refrigerant pressure on the outlet side of the compressor 21 after a predetermined time is calculated by a three-point forecast method or the like, for example, on the basis of data of the high-pressure pressure value for a past predetermined period of time relating to detection of the pressure detecting means 41 and if the value is determined to be larger than the second pressure value, the refrigerant pressure is lowered by control, a trend of the refrigerant pressure can be determined so that the trend is responded according to the determination and the pressure does not exceed the lowest critical pressure, and the refrigerant can be prevented from being decomposed. Also, by controlling one or more in combination of the condenser fan 31, the evaporation fan 32 and the like, the refrigerant pressure on the outlet side of the compressor 21 can be effectively lowered.

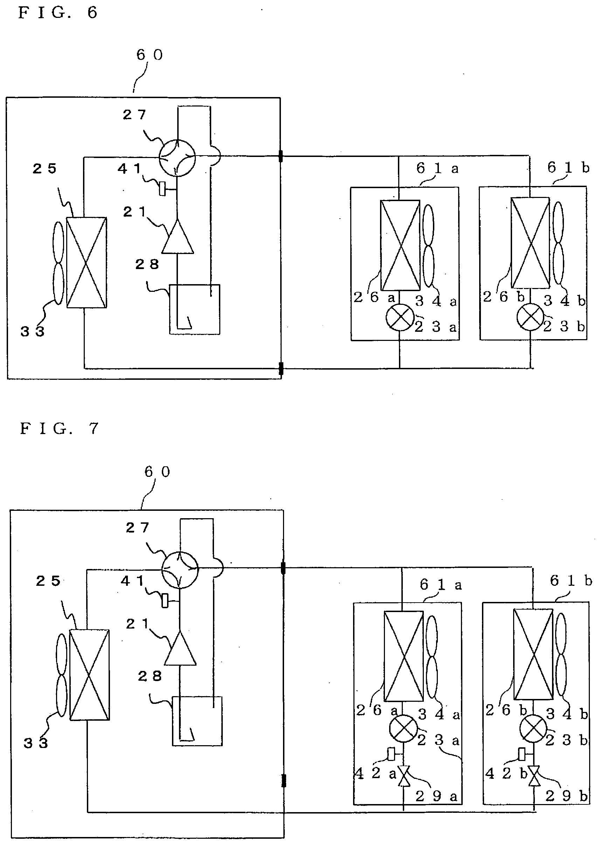

Fig. 6 is a diagram illustrating a configuration of an air conditioner according to a refrigerating cycle device helpful to explain the present invention. In this refrigerating cycle device, an air conditioner such as a multi air conditioner for building will be described as a typical example of the refrigerating cycle device previously discussed. In Fig. 6, means and the like given the same reference numerals as those in Fig. 1 are means basically performing the same operations as the operations described above. Here, the control means 53 in this refrigerating cycle device executes control for controlling operations of each means (particularly means on the side of an outdoor unit 60) of the refrigerating cycle device on the basis of an operation state of indoor units 61a and 61b.

The air conditioner in Fig. 6 has the single outdoor unit 60 and two indoor units 61a and 61b. The outdoor unit 60 has the compressor 21, an outdoor heat exchanger 25, a four-way valve 27, an accumulator 28, an outdoor heat exchanger fan 33, and the pressure detecting means 41. Also, the indoor units 61a and 61b have expanding means 23a and 23b, indoor heat exchangers 26a and 26b, and indoor heat exchanger fans 34a and 34b, respectively. If not particularly being distinguished, the indoor units 61a and 61b and their constituting means will be described with omitting their suffixes (the same applies to the following).

The outdoor heat exchanger 25 functions as the condenser 22 in Embodiment 1 in a cooling operation, into which a refrigerant discharged by the compressor 21 flows, and functions as the evaporator 24 in a heating operation by switching of the four-way valve 27 and performs heat exchange between air and the refrigerant. Also, the indoor heat exchangers 26a and 26b function as the evaporator 24 in a cooling operation, contrary to the outdoor heat exchanger 25, and function as the condenser 22 in a heating operation and perform heat exchange between indoor air of a space to be air-conditioned and the refrigerant.

Also, the accumulator 28 is means for reserving extra refrigerant. Here, a case in which the accumulator is attached to the intake side of the compressor 21 is shown, but a receiver may be attached to the outlet side of the heat exchanger to become the condenser 22, for example, so that the liquid refrigerant is reserved. The outdoor heat exchanger fan 33, the indoor heat exchanger fans 34a and 34b are provided for efficient heat exchange between the air and the refrigerant. In the air conditioner of this refrigerating cycle device, too, the refrigerant similar to that previously discussed is used and circulated in the refrigerant circuit.

Subsequently, an operation of the air conditioner in a heating operation according to this refrigerating cycle device will be described on the basis of a flow of the refrigerant. Arrows along the refrigerant circuit shown in Fig. 6 represent a flow of the refrigerant in the heating operation. The high-temperature and high-pressure gas refrigerant pressurized by compression of the compressor 21 and discharged flows into the indoor unit 61 through the piping. In the indoor unit 61, the refrigerant having passed through the indoor heat exchanger 26 is condensed and liquefied. At this time, the refrigerant radiates heat to the indoor air fed into by the indoor heat exchanger fan 34, by which the indoor air as a target of the heat exchange is heated. The heated indoor air is supplied into a room as a hot air. The liquefied refrigerant is decompressed while passing through the expanding means 23. Then, the decompressed refrigerant is evaporated while passing through the outdoor heat exchanger 25 and gasified. The gasified refrigerant is sucked into the compressor 21 again.

Here, the expanding means 23 of the indoor unit 61 controls a flow rate of the refrigerant passing through the indoor heat exchanger 26. For example, if the temperature of the space to be air-conditioned where the indoor unit 61 is installed reaches a target temperature, the indoor unit 61 is brought into a thermo-off state, the indoor heat exchanger fan 34 is stopped, and the expanding means 23 is fully closed. Here, the closed state in this refrigerating cycle device means the minimum opening degree to such a degree that the refrigerant does not flow. Thus, the refrigerant does not pass through the indoor heat exchanger 26 in the thermo-off state.

While the air conditioner is performing the heating operation, the indoor heat exchanger 26 functions as a condenser, but if either one of the indoor units 61a and 61b is brought into the thermo-off state, the expanding means 23 of the indoor unit 61 is fully closed, and the refrigerant no longer passes through the indoor heat exchanger 26. Thus, the number of condensers (heat exchangers on the high pressure side) is rapidly decreased, and the refrigerant pressure on the high pressure side is raised.

Normally, the indoor unit 61 is brought into the thermo-off state, and feedback control is executed so that the raised pressure of the refrigerant on the high pressure side gets close to the target pressure. However, if the refrigerant having double bond is circulated, overshoot of the refrigerant pressure should be prevented in order to prevent decomposition of the refrigerant.

Therefore, if the control means 53 determines that the temperature of the space to be air-conditioned detected by temperature detecting means (not shown) provided on the indoor unit 61, for example, reaches the target temperature, the control means controls operations of the means constituting the refrigerating cycle device such as stop of refrigerant inflow into the indoor heat exchanger 26 by fully closing the expanding means 23, stop of the indoor heat exchanger fan 34 and the like before stop of the supply of a heat quantity to the indoor heat exchanger 26 (condenser) or substantially at the same time as the stop of the supply of a heat quantity so that the refrigerant pressure on the high pressure side of the refrigerant circuit is lowered. As a result, the refrigerant pressure does not exceed the minimum critical pressure, and the refrigerant is prevented from being decomposed.

Here, with regard to the control to lower the refrigerant pressure executed by the control means 53, control by means (expanding means 23, indoor heat exchanger fan 34) on the side of the indoor unit 61 continuing operations is practically difficult. There can be measures such that the compressor frequency is lowered by a predetermined number if the compressor 21 is a compressor having an inverter circuit or control is made so that the fan rotation number of the outdoor heat exchanger fan 33 is decreased. Basically, control of operation of the compressor 21 has an immediate effect and effective in lowering the pressure, but the compressor 21 and the outdoor heat exchanger fan 33 may be controlled in combination.

As mentioned above, as in the previous refrigerating cycle device, in the refrigerating cycle device such as an air conditioner in which the plurality of indoor units 61 are connected in parallel and the indoor heat exchanger 26 in the indoor unit 61 functions as a condenser as in the heating operation, for example, in order to prevent rapid rise of the refrigerant pressure on the high pressure side and exceeding of the minimum critical pressure since the refrigerant suddenly stops passing in the corresponding indoor heat exchanger 26 or the indoor heat exchanger fan 34 is stopped and heat quantity of the refrigerant cannot be emitted due to full closing of at least one unit of the expanding means 23, before or substantially at the same time when the expanding means 23 is fully closed, the control means 53 controls the operation of the compressor 21, for example, so as to lower the refrigerant pressure on the outlet side of the compressor 21 and to prevent the pressure from exceeding the minimum critical pressure. Thus, the refrigerant containing a chemically unstable substance having double bond can be prevented from being attacked by decomposition of the substance itself having double bond or decomposition of substances of the other refrigerants in the mixed refrigerant and decomposed so as to stop functioning as the refrigerant. Therefore, the performances of the refrigerating cycle device can be maintained for a long time, and moreover, reliability can be ensured.

Fig. 7 is a diagram illustrating a configuration of an air conditioner according to an embodiment of the present invention. In this embodiment, the air conditioner will be described. In Fig. 7, means and the like given the same reference numerals as those in Fig. 6 are means basically performing the same operations as the operations described above. In Fig. 7, in the indoor units 61a and 61b, at positions opposing the indoor heat exchangers 26a and 26b with respect to the expanding means 23a and 23b (the side where the liquid refrigerant or the gas-liquid two-phase refrigerant flows, the upstream side in the cooling operation), flow-passage opening / closing means 29a and 29b are installed, respectively. The flow-passage opening / closing means 29a and 29b are means for adjusting (controlling) a flow rate of the refrigerant similarly to the expanding means 23a and 23b. However, they are not capable of fine flow-rate control as the expanding means 23a and 23b but if they are opened, the refrigerant is made to pass, while if they are closed, the refrigerant is not made to pass. Also, pressure detecting means 42a and 42b are installed between the expanding means 23a and 23b and the flow-passage opening / closing means 29a and 29b. The control in this embodiment is also executed by the control means 53.

While the air conditioner is performing the cooling operation, for example, the expanding means 23 of the indoor unit 61 is controlling a flow rate of the refrigerant to flow into the indoor heat exchanger 26 and to be passed. If the temperature of the space to be air-conditioned in which the indoor unit 61 is installed gets close to the target temperature, for example, control is made so that the expanding means 23 is throttled to a direction where an opening area is gradually reduced, for example. Then, when the temperature of the space to be air-conditioned reaches the target temperature, the flow-passage opening / closing means 29 is brought into a closed state so that the refrigerant does not flow into the indoor heat exchanger 26.

Here, if the expanding means 23 is throttled till the refrigerant flow rate reaches zero, the expanding means 23 is considered to be fully closed. In this case, the liquid refrigerant is sealed in the piping between the flow-passage opening / closing means 29 and the expanding means 23. The sealed liquid refrigerant is gasified if being heated from the periphery, and its volume is rapidly increased. Gasification (evaporation) of the refrigerant rapidly raises the refrigerant pressure. In this way, since the pressure is raised in a portion where the refrigerant (particularly, the liquid refrigerant) is sealed, the minimum critical pressure might be exceeded, and the refrigerant is likely to be decomposed.

Then, in the air conditioner of this embodiment, pressure detecting means 42 is installed between the flow-passage opening / closing means 29 and the expanding means 23 in order to prevent the refrigerant from being located in a sealed state by enlarging the opening area of the expanding means 23 before the refrigerant pressure relating to detection by the pressure detecting means 42 exceeds the lowest critical pressure and to prevent decomposition of the refrigerant caused by pressure rise.

Also, if a space between the flow-passage opening / closing means 29 and the expanding means 23 is sealed, too, heat is applied here from the outside, and a problem will not occur unless the liquid in this sealed section is evaporated and gasified. Since a latent heat quantity for the refrigerant to be evaporated is large, even if the space between the flow-passage opening / closing means 29 and the expanding means 23 is sealed, the refrigerant pressure is not raised immediately. Thus, even without providing the pressure detecting means 42 between the flow-passage opening / closing means 29 and the expanding means 23, by executing control of the control means 53 such that the flow-passage opening / closing means 29 or the expanding means 23 is brought into an open state after a predetermined time has elapsed since determination that the piping between the expanding means 23 and the flow-passage opening / closing means 29 is sealed, the pressure rise can be prevented, and the similar effect can be obtained.

Also, not only the above-mentioned space between the expanding means 23 and the flow-passage opening / closing means 29, the same applies to a configuration having a structure that can seal the refrigerant in the refrigerant circuit (if a plurality of expanding means are connected in series by piping or the like). In that case, too, the rise of the refrigerant pressure can be prevented and the decomposition of the refrigerant can be prevented not by sealing the refrigerant such that the expanding means 23 is prevented from being fully closed, for example.

As mentioned above, according to this embodiment, by controlling the refrigerant flow-rate by plural means such as the space between the expanding means 23 and the flow-passage opening / closing means 29, for example, if it is determined that the refrigerant is sealed, the control means 53 executes control such that at least one (the expanding means 23, here) is opened, the rapid rise of the refrigerant pressure in the sealed state is prevented, and exceeding of the lowest critical pressure can be prevented. Thus, the refrigerant containing a chemically unstable substance having double bond can be prevented from being attacked by decomposition of the substance itself having double bond or decomposition of the substances of the other refrigerants in the mixed refrigerant and decomposed so as to stop functioning as the refrigerant. Therefore, performances of the refrigerating cycle device can be maintained for a long time, and moreover, reliability can be ensured.

At this time, since the pressure detecting means 42 is installed at a location which might be in a sealed state, the control means 53 can make more detailed determination or the like concerning the sealing of the refrigerant. Also, the control means 53 determines a state in the control of the expanding means 23 and the flow-passage opening / closing means 29, for example, and if it determines that the space between the expanding means 23 and the flow-passage opening / closing means 29 is in a sealed state, the control means makes control such that at least either one is opened so as to release the sealed state after a predetermined period of time, for example. And thus, the pressure detecting means 42 does not have to be provided, which can contribute to cost reduction.

In the above refrigerating cycle devices, the mixed refrigerant was described, but the present invention can be also applied to a single refrigerant, which is a refrigerant made up of a substance having double bond, for example. The lowest critical pressure in this case is a critical pressure in the single refrigerant made up of a substance having double bond. Not only to the substance having double bond, can the present invention be also applied to a situation including a refrigerant made up of a chemically unstable substance.

### Industrial Applicability

In the above-mentioned embodiment the application to the air conditioner capable of a cooling / heating operation was described, but the present invention can also be applied to other refrigerating cycle devices constituting a refrigerant circuit such as a heat pump or the like.

### Reference Signs List

- 21: compressor
- 22: condenser
- 23, 23a, 23b: expanding means
- 24: evaporator
- 25: outdoor heat exchanger
- 26a, 26b: indoor heat exchanger
- 27: four-way valve
- 28: accumulator
- 29a, 29b: flow-passage opening / closing means
- 31: condenser fan
- 32: evaporator fan
- 33: outdoor heat exchanger fan
- 34a, 34b: indoor heat exchanger fan
- 41, 42a, 42b: pressure detecting means
- 51: pressure storage means
- 52: critical pressure storage means
- 53: control means

## Claims

1. A refrigerating cycle devices, comprising
a refrigerant containing a substance having a chemically unstable double boned;
a compressor (21) for compressing said refrigerant;
a condenser (22) for condensing said refrigerant by heat exchange;
expanding means (23, 23a, 23b) for decompressing the condensed refrigerant; and
an evaporator (24) for evaporating said decompressed refrigerant by heat exchange; the compressor, the condenser, the expanding means and the evaporator being connected by piping so as to constitute a refrigerant circuit through which said refrigerant is circulated, and
control means (53) for controlling an operation of said refrigerant circuit, **characterized in that** the control means is configured to control the operation so that a pressure of said refrigerant in the refrigerant circuit becomes less than a critical pressure of said substance having the double bond to prevent said refrigerant from becoming a supercritical state to destroy the double bond of said refrigerant, wherein
a plurality of flow-rate control means disposed in series in said refrigerant circuit, said plurality of flow-rate control means being said expanding means (23, 23a, 23b) and flow passage opening/closing means (29a, 29b) or a plurality of expanding means (23a, 23b) for adjusting a flow rate of said refrigerant in said refrigerant circuit is disposed in said refrigerant circuit,
said control means (53) is configured to execute control such that at least one of the plurality of flow-rate control means is opened if a space between at least two flow-rate control means is judged to be in a sealed state.

2. The refrigerating cycle device of claim 1, wherein
the refrigerant is a mixed refrigerant,
said control means (53) is configured to control operations of means constituting said refrigerant circuit so that a value of a pressure of said refrigerant in the refrigerant circuit becomes a pressure value or less set on the basis of the lowest critical pressure in the substance constituting said refrigerant.

3. The refrigerating cycle device of claim 1 or 2, further comprising
high-pressure side pressure detecting means (41, 42a, 42b) disposed at a position anywhere in a flow passage from an outlet side of said compressor (21) to an inlet of said expanding means (23, 23a, 23b) and transmitting a signal on the basis of a detected pressure, wherein
said control means (53) lowers a compressor frequency of said compressor (21) or stops said compressor (21) if said control means (53) determines that the pressure value on the basis of a signal of said high-pressure side pressure detecting means (41, 42a, 42b) is larger than a first pressure value.

4. The refrigerating cycle device of any one of claims 1 to 3, further comprising
pressure storage means (51) for storing values of a plurality of pressures relating to detection of said high-pressure side pressure detecting means (41, 42a, 42b) for a predetermined period of time, wherein
said control means (53) calculates a value of a pressure after the predetermined time on the basis of the values of said plurality of pressures as a forecast value, and if said control means (53) judges that said forecast value is larger than a second pressure value, said control means (53) controls operations of means constituting said refrigerant circuit.

5. The refrigerating cycle device of any one of claims 1 to 4, further comprising
blowing means for blowing air to be heat-exchanged with said refrigerant to said condenser (22) and / or said evaporator (24), wherein
said control means (53) controls an operation of said blowing means.

6. The refrigerating cycle device of any one of claims 1 to 5, wherein
in the refrigerating cycle device in which a plurality of said condensers (22) are connected in parallel,
said control means (53) controls operations of means constituting said refrigerant circuit so as to lower a pressure of the refrigerant in said refrigerant circuit before refrigerant supply to at least one of said condensers (22) is stopped or substantially at the same time as the stop.

7. The refrigerating cycle device of claim 6, wherein
said control means (53) lowers a compressor frequency in said compressor (21) so as to lower the refrigerant pressure in said refrigerant circuit.

8. The refrigerating cycle device of any of claims 1 to 7, wherein
pressure detecting means (41, 42a, 42b) for transmitting a signal on the basis of a detected pressure is disposed between said plurality of flow-rate control means; and
said control means (53) judges a sealed state of said piping on the basis of the signal from the pressure detecting means (41, 42a, 42b) between said flow-rate control means.

9. The refrigerating cycle device of any one of claims 1 to 7, wherein
said control means (53) executes control to open at least either of said flow-rate control means after a predetermined time has elapsed since the judgment of said sealed state.

10. An air conditioner, wherein cooling / heating for a target space is performed by the refrigerating cycle device of any one of claims 1 to 9.

## Patentansprüche

1. Kühlkreislaufvorrichtung, umfassend ein Kühlmittel, das eine Substanz mit einer chemisch instabilen Doppelbindung aufweist;
einen Kompressor (21) zum Komprimieren des Kühlmittels;
einen Kondensor (22) zum Kondensieren des Kühlmittels durch Wärmeaustausch;
Expandiermittel (23, 23a, 23b) zum Dekomprimieren des kondensierten Kühlmittels; und
einen Verdampfer (24) zum Verdampfen des dekomprimierten Kühlmittels durch Wärmeaustausch; wobei der Kompressor, der Kondensor, die Expandiermittel und der Verdampfer über Rohrleitungen verbunden sind, um so einen Kühlmittelkreis zu bilden, durch den das Kühlmittel zirkuliert, und
Steuermittel (53) zum Steuern einer Operation des Kühlmittelkreises, **dadurch gekennzeichnet, dass** die Steuermittel ausgebildet sind, die Operation derart zu steuern, dass ein Druck des Kühlmittels in dem Kühlmittelkreis geringer wird als ein kritischer Druck der Substanz mit der Doppelbindung, um zu verhindern, dass das Kühlmittel in einen superkritischen Zustand kommt, der die Doppelbindung des Kühlmittels zerstört, wobei
eine Mehrzahl von Durchflussraten-Steuermitteln in Reihe in dem Kühlmittelkreis angeordnet ist, wobei die Mehrzahl von Durchflussraten-Steuermitteln die Expandiermittel (23, 23a, 23b) und Durchfluss-Öffnungs/Schließmittel (29a, 29b) sind oder eine Mehrzahl von Expandiermitteln (23a, 23b) zum Einstellen einer Durchflussrate des Kühlmittels in dem Kühlmittelkreis in dem Kühlmittelkreis angeordnet ist,
die Steuermittel (53) ausgebildet sind, eine Steuerung derart durchzuführen, dass mindestens eines der Mehrzahl von Durchflussraten-Steuermitteln geöffnet ist, wenn ein Raum zwischen mindestens zwei Durchflussraten-Steuermitteln als in einem abgedichteten Zustand befindlich eingeschätzt wird.

2. Kühlkreislaufvorrichtung nach Anspruch 1, bei der
das Kühlmittel ein Mischkühlmittel ist,
die Steuermittel (53) ausgebildet sind, Operationen von Mitteln zu steuern, die den Kühlmittelkreis bilden, so dass ein Wert eines Drucks des Kühlmittels in dem Kühlmittelkreis einen Druckwert annimmt, der auf der Grundlage des niedrigsten kritischen Drucks in der das Kühlmittel bildenden Substanz festgelegt wird, oder geringer.

3. Kühlkreislaufvorrichtung nach Anspruch 1 oder 2, außerdem umfassend
hochdruckseitige Druckdetektionsmittel (41, 42a, 42b), die an einer Position irgendwo im Durchfluss von einer Auslassseite des Kompressors (21) zu einem Einlass der Expandiermittel (23, 23a, 23b) angeordnet sind und ein Signal auf der Grundlage eines detektierten Drucks senden, wobei
die Steuermittel (53) eine Kompressorfrequenz des Kompressors (21) verringern oder den Kompressor (21) anhalten, wenn die Steuermittel (53) bestimmen, dass der Druckwert auf der Grundlage eines Signals der hochdruckseitigen Druckdetektionsmittel (41, 42a, 42b) größer ist als ein erster Druckwert.

4. Kühlkreislaufvorrichtung nach einem der Ansprüche 1 bis 3, außerdem umfassend
Druckspeichermittel (51) zum Speichern von Werten einer Mehrzahl von Drücken, die sich auf die Detektion der hochdruckseitigen Druckdetektionsmittel (41, 42a, 42b) für einen vorbestimmten Zeitraum beziehen, wobei
die Steuermittel (53) einen Wert eines Drucks nach der vorbestimmten Zeit auf der Grundlage der Werte der Mehrzahl von Drücken als einen Voraussagewert berechnen und wenn die Steuermittel (53) entscheiden, dass der Voraussagewert größer als der zweite Druckwert ist, die Steuermittel (53) Operationen von Mitteln steuern, die den Kühlkreis bilden.

5. Kühlkreislaufvorrichtung nach einem der Ansprüche 1 bis 4, außerdem umfassend
Blasmittel zum Blasen von mit dem Kühlmittel zu wärmetauschender Luft zu dem Kondensor (22) und/oder dem Verdampfer (24), wobei
die Steuermittel (53) einen Betrieb der Blasmittel steuern.

6. Kühlkreislaufvorrichtung nach einem der Ansprüche 1 bis 5, bei der
in der Kühlkreislaufvorrichtung, in der eine Mehrzahl von Kondensoren (22) parallel verbunden ist, die Steuermittel (53) Operationen der den Kühlmittelkreis bildenden Mittel so steuern, dass ein Druck des Kühlmittels in dem Kühlmittelkreis vor der Kühlmittelversorgung zu mindestens einem der Kondensoren (22) gestoppt wird oder im Wesentlichen zu der gleichen Zeit wie das Stoppen abgesenkt wird.

7. Kühlkreislaufvorrichtung nach Anspruch 6, bei der die Steuermittel (53) eine Kompressorfrequenz des Kompressors (21) absenken, um so den Kühlmitteldruck in dem Kühlmittelkreis zu verringern.

8. Kühlkreislaufvorrichtung nach einem der Ansprüche 1 bis 7, bei der
die Druckdetektionsmittel (41, 42a, 42b) zum Senden eines Signals auf der Grundlage eines detektierten Drucks zwischen der Mehrzahl der Durchflussraten-Steuermittel angeordnet sind; und
die Steuermittel (53) einen abgedichteten Zustand der Rohrleitungen auf der Grundlage des Signals von den Druckdetektionsmitteln (41, 42a, 42b) zwischen den Durchflussraten-Steuermitteln bestimmen.

9. Kühlkreislaufvorrichtung nach einem der Ansprüche 1 bis 7, bei der
die Steuermittel (53) eine Steuerung durchführen, bei der mindestens eines der Durchflussraten-Steuermittel geöffnet wird, nachdem ein vorbestimmter Zeitraum seit der Bestimmung des abgedichteten Zustands abgelaufen ist.

10. Klimaanlage, bei der ein Kühlen / Heizen eines Zielraums durch die Kühlkreislaufvorrichtung nach einem der Ansprüche 1 bis 9 durchgeführt wird.

## Revendications

1. Dispositif à cycles de réfrigération, comprenant :
un fluide frigorigène qui contient une substance présentant une liaison double, instable de manière chimique ;
un compresseur (21) destiné à comprimer ledit fluide frigorigène ;
un condenseur (22) destiné à condenser ledit fluide frigorigène par un échange de chaleur ;
des moyens d'expansion (23, 23a, 23b) destinés à décomprimer le fluide frigorigène condensé ; et
un évaporateur (24) destiné à faire évaporer ledit fluide frigorigène décomprimé par un échange de chaleur ;
le compresseur, le condenseur, les moyens d'expansion et l'évaporateur étant connectés par une tuyauterie de façon à constituer un circuit frigorigène à travers lequel circule ledit fluide frigorigène ; et
des moyens de commande (53) destinés à commander le fonctionnement dudit circuit de fluide frigorigène, **caractérisé en ce que** les moyens de commande sont configurés de façon à commander le fonctionnement de telle sorte que la pression dudit fluide frigorigène dans le circuit de fluide frigorigène, soit inférieure à une pression critique de ladite substance présentant la liaison double, de manière à empêcher ledit fluide frigorigène de se trouver dans un état supercritique de destruction de la liaison double dudit fluide frigorigène, dans lequel :
une pluralité de moyens de commande de débit disposés en série dans ledit circuit de fluide frigorigène, ladite pluralité de moyens de commande de débit qui sont lesdits moyens d'expansion (23, 23a, 23b), et des moyens d'ouverture / de fermeture de passage (29a, 29b) ou une pluralité de moyens d'expansion (23a, 23b) destinés à régler le débit dudit fluide frigorigène dans ledit circuit de fluide frigorigène, sont disposés dans ledit circuit de fluide frigorigène ;
lesdits moyens de commande (53) sont configurés de façon à exécuter une commande de telle sorte qu'au moins un des moyens de la pluralité de moyens de commande de débit, sont ouverts si l'on juge qu'un espace entre au moins deux moyens de commande de débit, se trouve dans un état fermé hermétiquement.

2. Dispositif à cycles de réfrigération selon la revendication 1, dans lequel :
le fluide frigorigène est un fluide frigorigène mélangé ;
lesdits moyens de commande (53) sont configurés de façon à commander le fonctionnement des moyens constituant ledit circuit de fluide frigorigène de telle sorte que la valeur de la pression dudit fluide frigorigène dans le circuit de fluide frigorigène, soit égale ou inférieure à une valeur de pression établie sur la base de la plus basse pression critique de la substance constituant ledit fluide frigorigène.

3. Dispositif à cycles de réfrigération selon la revendication 1 ou la revendication 2, comprenant en outre :
des moyens de détection de la pression du côté haute pression (41, 42a, 42b) disposés à n'importe quel endroit du passage à partir du côté sortie dudit compresseur (21) jusqu'à l'entrée desdits moyens d'expansion (23, 23a, 23b), et qui transmettent un signal sur la base de la pression détectée, dans lequel :
lesdits moyens de commande (53) abaissent la fréquence de compresseur dudit compresseur (21), ou arrêtent ledit compresseur (21), si lesdits moyens de commande (53) déterminent que la valeur de la pression sur la base d'un signal desdits moyens de détection de la pression du côté haute pression (41, 42a, 42b), est supérieure à une première valeur de pression.

4. Dispositif à cycles de réfrigération selon l'une quelconque des revendications 1 à 3, comprenant en outre :
des moyens de stockage de pression (51) destinés à stocker les valeurs d'une pluralité de pressions qui se rapportent à la détection par lesdits moyens de détection de la pression du côté haute pression (41, 42a, 42b) pendant une période de temps prédéterminée, dans lequel :
lesdits moyens de commande (53) calculent la valeur de la pression après la période de temps prédéterminée, sur la base des valeurs de ladite pluralité de pressions en tant que valeur de prévision, et si lesdits moyens de commande (53) jugent que ladite valeur de prévision est supérieure à une seconde valeur de pression, lesdits moyens de commande (53) commandent le fonctionnements desdits moyens constituant ledit circuit de fluide frigorigène.

5. Dispositif à cycles de réfrigération selon l'une quelconque des revendications 1 à 4, comprenant en outre :
des moyens de soufflage destinés à souffler l'air qui doit subir un échange de chaleur avec ledit fluide frigorigène, vers ledit condenseur (22) et / ou vers ledit évaporateur (24), dans lequel :
lesdits moyens de commande (53) commandent le fonctionnement desdits moyens de soufflage.

6. Dispositif à cycle de réfrigération selon l'une quelconque des revendications 1 à 5, dans lequel :
dans le dispositif à cycles de réfrigération où sont connectés en parallèle une pluralité desdits condenseurs (22),
lesdits moyens de commande (53) commandent le fonctionnement des moyens constituant ledit circuit de fluide frigorigène de façon à abaisser la pression du fluide frigorigène dans ledit circuit de fluide frigorigène avant que l'approvisionnement en fluide frigorigène vers l'un au moins desdits condenseurs (22), ne soit arrêté, ou sensiblement en même temps que l'arrêt.

7. Dispositif à cycles de réfrigération selon la revendication 6, dans lequel :
lesdits moyens de commande (53) abaissent la fréquence de compresseur dans ledit compresseur (21) de façon à abaisser la pression du fluide frigorigène dans ledit circuit de fluide frigorigène.

8. Dispositif à cycles de réfrigération selon l'une quelconque des revendications 1 à 7, dans lequel :
les moyens de détection de la pression (41, 42a, 42b) destinés à transmettre un signal sur la base de la pression détectée, sont disposés entre ladite pluralité de moyens de commande de débit ; et
lesdits moyens de commande (53) jugent l'état hermétique de ladite tuyauterie sur la base du signal en provenance des moyens de détection de la pression (41, 42a, 42b) entre lesdits moyens de commande de débit.

9. Dispositif à cycles de réfrigération selon l'une quelconque des revendications 1 à 7, dans lequel :
lesdits moyens de commande (53) exécutent une commande consistant à ouvrir l'un au moins desdits moyens de commande de débit après qu'une période de temps prédéterminée s'est écoulée, depuis le jugement dudit état fermé hermétiquement.

10. Climatiseur, dans lequel le refroidissement / le chauffage d'un espace cible, est exécuté par le dispositif à cycles de réfrigération selon l'une quelconque des revendications 1 à 9.
